# EUROPEAN PATENT APPLICATION

(11) **EP 1 055 869 A2**
(43) Date of publication of application: **29.11.2000**
(21) Application number: 00107666.0
(22) Date of filing: 10.04.2000
(51) Int. Cl.: F21V 5/04

(54) **Glass lens for automotive lighting**

(30) Priority: 28.05.1999 US 322469
(71) Applicant: CORNING INCORPORATED, Corning, N.Y. 14831 (US)
(72) Inventor: Clark, Dennis Butch, Corning, NY 14831 (US)
(74) Representative: Boon, Graham Anthony

(57) **Abstract**

The present invention is directed to a glass lens (10) for an automotive lamp. More specifically the glass lens (10) comprises a Fresnel shaped portion (12) integrally formed with said lens and a smooth surface portion (14) peripherally located to the Fresnel shaped portion (12). The present invention, is also directed at an automotive lamp comprising a reflector (24), a light source (30) and an essentially flat lens (10) comprising a Fresnel shaped portion (12) integrally formed with said lens and a smooth surface portion (14) peripherally located to the Fresnel shaped portion.

## Description

### BACKGROUND OF THE INVENTION

### 1. Field of Invention.

The present invention relates to a lens for automotive lighting, more specifically to an essentially flat lens having a Fresnel shaped portion integrally formed with the lens and a peripheral smooth portion for automobile headlamps or fog lamps.

### 2. Description of Related Art.

Automotive lamps, such as headlamps or fog lamps, typically consist of several components including a reflector, a light bulb, an inner lens for converting light beams from the light bulb, and an outer lens for providing protection to the inner lens and completing the lamp unit. The aforementioned separate components are assembled together by epoxy, glue or other means resulting in a costly and cumbersome process, in addition to placing limitations on lens and lamp design. Cost savings, however, could be achieved by reducing the number of components, for example, by combining the outer and inner lens into a one-piece unit. Therefore, there exits the need for a one piece lens unit that reduces lamp manufacturing costs and concurrently allows the automobile manufacturer more flexibility in lamp design.

The conventional inner lens is made of glass and may be an aspheric lens or a fresnel lens although the former is more preferred in the industry because of its manufacturing simplicity. Typically, some sort of pressing operation is used to make the glass lens. However, art-known pressing processes would not be compatible with producing a one-piece lens unit including an aspheric lens because the variation in glass thickness would be so great that quality and performance would be sacrificed.

Therefore, there exits the need for an automobile headlamp or fog lamp lens which can be manufactured with known glass pressing techniques and still posses the same optical properties of a lamp comprising an aspheric lens.

It is an object of the present invention to provide such a glass lens.

It is another object of the present invention to provide a lower cost and more durable automotive head lamp or fog lamp glass lens.

It is yet another object of the present invention to provide a thinner glass lens which allows for more flexibility with respect to automotive lamp design.

### SUMMARY OF THE INVENTION

Briefly the present invention provides for an essentially flat glass lens having a Fresnel shaped portion integrally formed with the lens and a peripheral smooth portion. The Fresnel shaped portion is circular and preferably centrally located within the parameter of the lens. The lens may be rectangular or circular.

Also provided herein is an automotive lamp possessing a reflector, a light source and an essentially flat lens comprising a Fresnel shaped portion integrally formed with the lens and a smooth surface portion peripherally located to the Fresnel shaped portion.

### BRIEF DESCRIPTION OF THE DRAWINGS

FIG. 1 illustrates a top view of a planar glass lens which has a Fresnel shaped portion integrally formed with the lens and a peripheral smooth portion.
FIG. 2 illustrates a cross-sectional view taken generally along line A-A in FIG. 1.
FIG. 3 illustrates an expanded view of section B in FIG. 2.
FIG. 4 illustrates an expanded view of section C in FIG. 3.
FIG. 5 illustrates a side view of an embodiment of an automobile lamp comprising a reflector, a light source and a lens of the present invention.

### DETAILED DESCRIPTION OF THE PREFERRED EMBODIMENTS

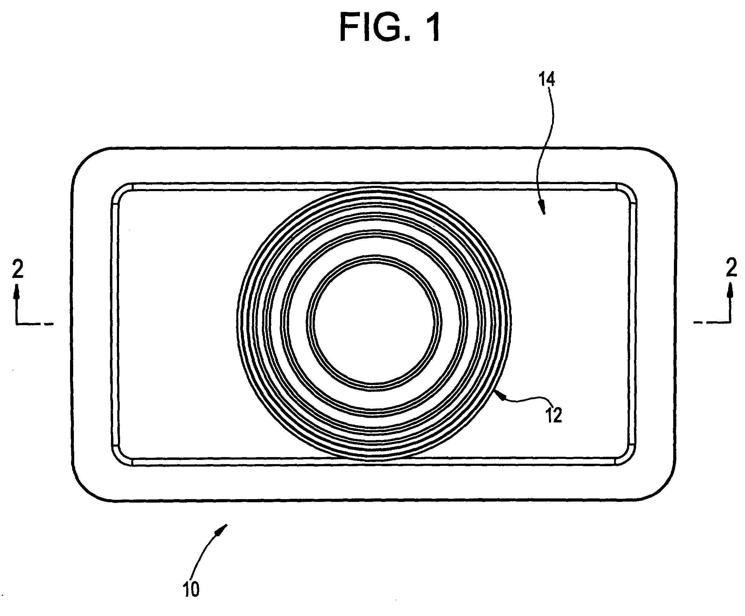

FIGS. 1 through 5 illustrate a preferred embodiment of present invention, wherein shown at numeral **10** is an essentially flat glass lens which comprises a Fresnel shaped portion **12** and a peripheral smooth portion **14**.

Lens **10** is preferably made of glass selected from the group consisting of borosilicate and soda-lime silicate.

Conventional hot-glass pressing techniques are employed in the manufacturing of present inventive lens. One suitable pressing process involves a mold and plunger apparatus assembly, wherein a charge of molten hot molten glass is placed in the mold and the plunger apparatus is introduced into the change of glass so as to press-form a finished lens between the mold and the plunger.

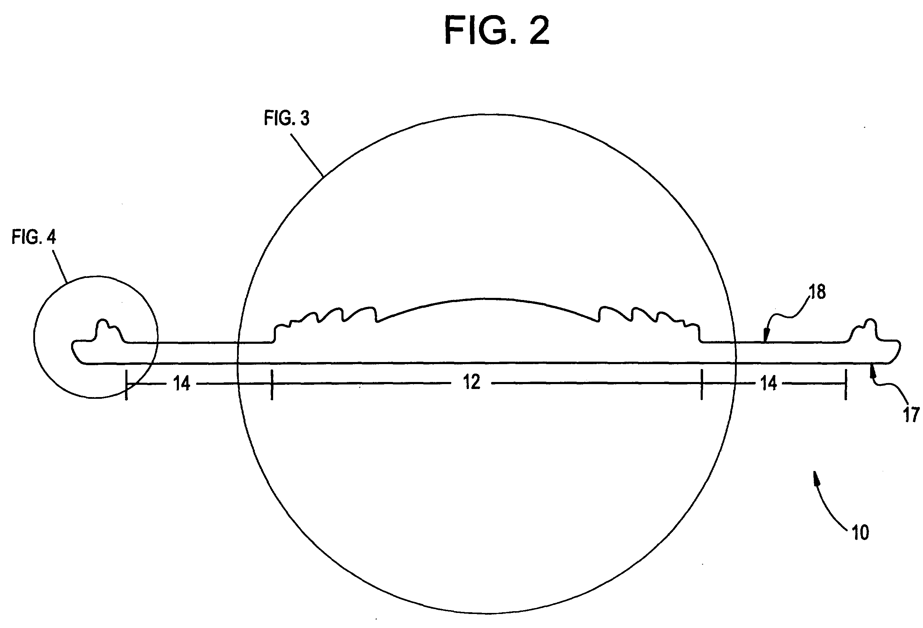

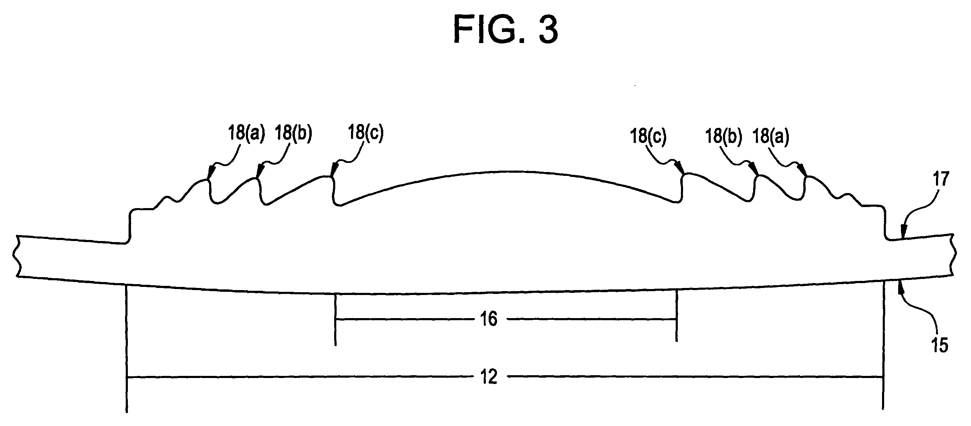

Lens **10** has a first face **15** and a second face **17**. Second face **18** contains Fresnel shaped portion **12** and is closest to the light source **28**. Light source **28** is detachably mounted on reflector **24**. In a preferred embodiment lens **10** has dimensions of approximately 3.3 in. x 5.8 in. Fresnel shaped portion **12** includes a convex section **16** bounded on either side by a series of elevations **18(a)**, **18(b)**, and **18(c)** as shown in FIG. 3. Elevations **18(a)**, **18(b)**, and **18(c)** extend vertically (as shown by the arrows) 0.079", 0.090", and 0.101", respectively. Preferably, Fresnel shaped portion **12** has a diameter of approximately 2.6 in., and is preferably located in the center of lens **10** and in front of light source **30** such that light source **30** is behind the optical center of the lens.

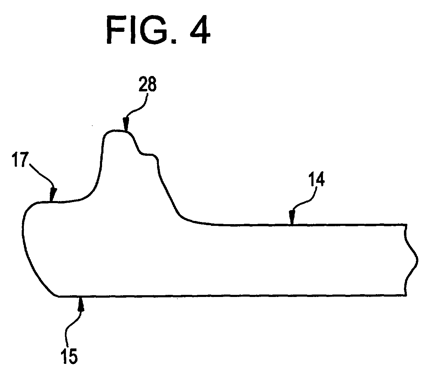

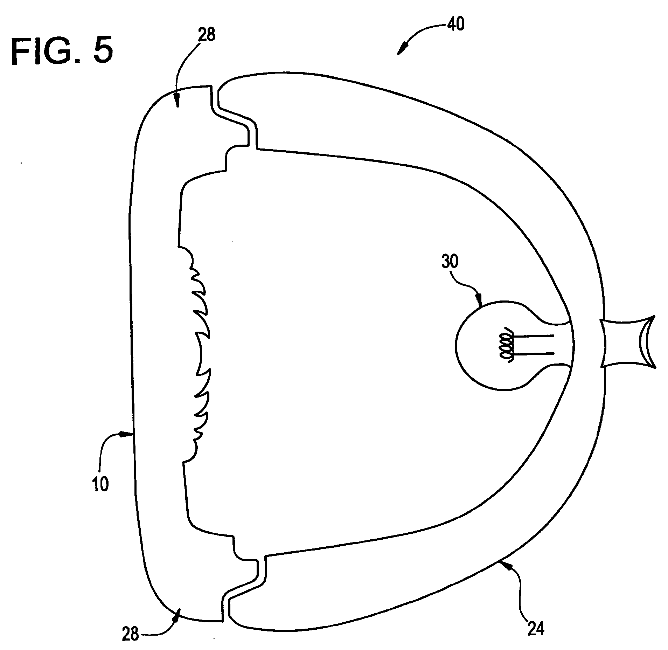

Now referring to FIGS. 4 and 5, lens **10** engages the open end **26** of reflector **24** at projections **28**. Attachment of lens **10** and reflector **24** may be attained by any suitable art-known sealing means, such as for example by applying epoxy. Lens **10** which attaches to the rim of reflector **24** forms lamp **40**. A second lens which would be ordinarily used to cover the light converting lens, i.e., lens **10**, is not necessary in the present invention. Therefore, the lens of the present invention achieves the following two functions. First, lens **10** directs light in a given direction. Second, lens **10** closes the open top of the reflector whereby a lamp unit suitable for employment as an automobile headlamp or fog lamp is formed. Eliminating the need for a top or second lens reduces lamp manufacturing costs which in turn translates to savings to the end customer and enables the lamp maker more flexibility in terms design options, a condition which is desirable in the automotive industry where designs are constantly changing and evolving.

Reflector **24** can be designated as conventional and so a detailed description thereof is omitted. Reflector **24** may be made of glass, metal or plastic. A suitable reflector is disclosed in US Pat. No. 4,994,948 herein incorporated by reference.

Although lens **10** is shown as rectangular in FIGS. 1 to 5, it is to be understood that the lens may be circular, square or oval.

The present invention is a lens for automobile lamps, such as headlamps or fog lamps, the lens comprising a centrally located Fresnel shaped portion and a peripheral smooth portion which can be manufactured with art-know hot glass-pressing techniques and which allows for a lamp design with fewer components, hence lower in manufacturing cost.

Although the now preferred embodiments of the invention have been set forth, it will be apparent to those skilled in the art that various changes and modifications may be made thereto without departing from the spirit and scope of the invention as set forth in the following claims.

## Claims

1. A glass lens for an automotive lamp, said lens comprising a Fresnel shaped portion integrally formed with said lens and a smooth surface portion peripherally located to said Fresnel shaped portion.

2. The lens of claim 1, wherein said lens is essentially flat.

3. The lens of claim 1, wherein said Fresnel shaped portion is centrally located on said lens.

4. The lens of claim 3, wherein said centrally located Fresnel shaped portion is circular.

5. The lens of claim 1, wherein said lens is made of glass selected from the group consisting of borosilicate and soda-lime silicate.

6. The lens of claim 1 wherein said lens is rectangular.

7. The lens of claim 1 wherein said lens is round.

8. An automotive lamp comprising a reflector, a light source and an essentially flat lens comprising a Fresnel shaped portion integrally formed with said lens and a smooth surface portion peripherally located to said Fresnel shaped portion.
